# EUROPEAN PATENT APPLICATION

(11) **EP 3 260 267 A1**
(43) Date of publication of application: **27.12.2017**
(21) Application number: 16752197.0
(22) Date of filing: 22.01.2016
(51) Int. Cl.: B29C 47/14, B29C 47/88, B29C 55/02, B29C 55/12, B29C 67/20, C08J 9/00, C08J 9/28, H01M 2/16, B29K 23/00, B29K 105/04, B29L 7/00

(54) **METHOD FOR PRODUCING MICROPOROUS PLASTIC FILM**

(30) Priority: 20.02.2015 JP 2015031390
(71) Applicant: TORAY INDUSTRIES, INC., Otsu-shi, Shiga 520 (JP)
(72) Inventor: ICHINOMIYA, Takashi, Tokyo 1038666 (JP); SUGATA, Masami, Nasushiobara-shi Tochigi 329-2763 (JP)
(74) Representative: Webster, Jeremy Mark
(86) International application number: PCT/JP2016/051778
(87) International publication number: WO 2016/132808

(57) **Abstract**

Provided is a method for producing, with high productivity, a microporous plastic film having excellent physical properties and mechanical properties by preventing slip even in wet roller drawing. This method for producing a microporous plastic film is a method for producing a uniaxially or biaxially oriented microporous plastic film by kneading a diluent and a polyolefin polymer with an extruder, discharging the diluent-kneaded polymer from a die in a sheet form, cooling and solidifying the sheet discharged from the die on a drum, then reheating the solidified sheet, drawing the same in a sheet conveying direction with a plurality of rollers, cooling the sheet drawn in the sheet conveying direction, then gripping both ends of the sheet with clips, introducing the sheet into a tenter, and then cleaning the diluent, wherein: in drawing the sheet in the conveying direction, the sheet is drawn at the greatest ratio between the most downstream roller (B) in the conveying direction among said plurality of rollers, and a roller (A) that is driven by a motor and located next to said roller (B) on the upstream side in the conveying direction; and the ratio of the traveling speed of the clip, in said tenter, located on the most upstream side in the conveying direction to the peripheral speed of said roller (B) is set within the range of from -3% to +3%.

## Description

### Technical Field of the Invention

Our invention relates to a method for producing a microporous plastic film.

### Background Art of the Invention

Microporous plastic films have been broadly used as a substance separation membrane, permselective membrane, separator material of electrochemical element such as alkali rechargeable battery, lithium rechargeable battery, fuel cell and capacitor or the like. A separator for lithium ion battery is a particularly suitable application.

Patent documents 1 and 2 disclose a wet process for producing a microporous film made of plastic like polyolefin. In the wet process, a diluent such as liquid paraffin is added to a polymer, and is kneaded and dispersed, and then discharged through a die lip onto a cooling drum to be cooled and solidified to form a gel sheet, which is oriented uniaxially or biaxially by a roller method or tenter method for improving strength to produce a film having micropores by extracting the diluent.

Particularly by the roller method drawing the sheet in the travelling direction by a plurality of rollers, the lengthwise draw ratio can be changed freely by only changing a roller speed. By the other tenter method, the microporous plastic film can be improved in mechanical property because polyolefin molecules can be oriented with strong orientation in the drawing direction. As disclosed in Patent document 1, the roller method applied to the wet process might make the diluent bleed out from a gel sheet surface under a pressure caused by heat or tension while the conveying and drawing are performed in the presence of the diluent between film and roller. To draw such a gel sheet, the sheet is sufficiently cooled below the crystallization ending temperature of the polymer and is heated again below the melting point as disclosed in Patent document 2 where it is heated above the crystallization dispersion temperature.

### Prior art documents

### Patent documents

Patent document 1: JP2009-249480-A
Patent document 2: JP2013-530261-A

### Summary of the Invention

### Problems to be solved by the Invention

The wet roller method disclosed in Patent document 1 might have a problem that the diluent intervening between the roller and film lubricates to meander or fail a desirable draw ratio because of slip.

According to Patent document 1, the above-described slip can be prevented when a tension over the lengthwise draw tension is given between the lengthwise drawing machine and the lateral drawing machine (tenter), wherein the tension should preferably be greater than the draw tension by 20%. However, we found that such a great tension over the draw tension drew the sheet downstream of the lateral drawing machine to cause an undesirable slip adversely and therefore the slip couldn't be prevented.

According to Patent document 2, a predetermined range of contact time, contact angle and contact length between the lengthwise drawing roller and the sheet can prevent the slip and the sheet surface from being damaged. However, we found even such measures couldn't fully prevent the slip when we had an increased draw speed, a decreased draw temperature or an increased draw ratio in order to improve physical properties and mechanical properties of the microporous plastic film.

Accordingly, it could be helpful to provide a method for producing a microporous plastic film excellent in physical properties and mechanical properties by a high-speed drawing without slip under a high productivity.

### Means for solving the Problems

To achieve the above-described object, our method for producing a microporous plastic film comprises: kneading a diluent and a polyolefin resin with an extruder; discharging the polyolefin resin kneaded with the diluent from a die lip in a sheet shape; cooling and solidifying the sheet discharged from the die lip on a drum; reheating and drawing the solidified sheet with a plurality of rollers in a sheet conveying direction; cooling the sheet drawn in the sheet conveying direction; gripping both ends of the sheet with clips; introducing the sheet into a tenter; and washing the diluent out to prepare a uniaxially or biaxially oriented microporous plastic film, wherein the drawing between a roller (B) at the most downstream side in the sheet conveying direction among the rollers and a roller (A) which is adjacently upstream to the roller (B) in the sheet conveying direction and is driven by a motor is performed by a draw ratio greatest among the drawing in the sheet conveying direction, and a ratio of travelling speed of the clip of the tenter at the most upstream side in the sheet conveying direction to a peripheral speed of the roller (B) is -3% to +3%.

In our method for producing a microporous plastic film, it is preferable that the drawing is performed by a total draw ratio of 4 to 12 times in the sheet conveying direction, a peripheral speed ratio of the roller (B) to the roller (A) is 2 to 6 times, and a quotient of the peripheral speed ratio of the roller (B) to the roller (A) divided by the total draw ratio in the sheet conveying direction is 0.3 or more.

### Effect according to the Invention

Our invention can produce, with high productivity, a microporous plastic film having excellent physical properties and mechanical properties by preventing slip even in wet roller drawing.

### Brief explanation of the drawings

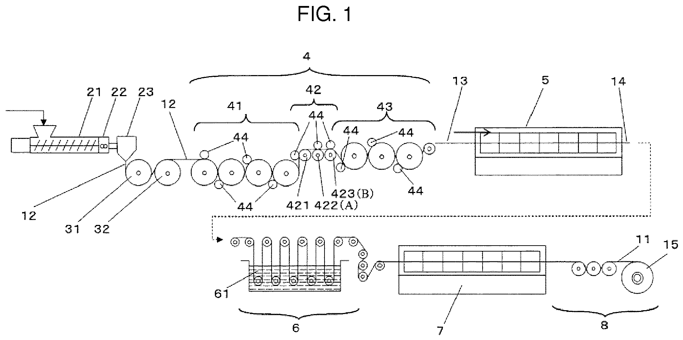

[Fig. 1] Fig. 1 is a schematic side view showing an example of production process of our microporous plastic film.

### Embodiments for carrying out the Invention

Hereinafter, desirable examples of our microporous plastic film will be explained with reference to figures. Fig. 1 is a schematic side view showing an example of production process of our microporous plastic film.

To desirably produce microporous plastic film 11, polyolefin resin is mixed with diluent and heated to melt to prepare polyolefin solution. The diluent decides a structure forming micropores of the microporous plastic film and contributes to improvement of drawability (for example, improvement as reduction of unevenness at a draw ratio for exhibiting a strength) at the time of drawing film.

The diluent is not limited particularly, as far as it can be mixed or dissolved with polyolefin resin. The diluent may be mixed with polyolefin in a melt-kneading state. Alternatively, it may be mixed with solid solvent at room temperature. Such prepared solid diluent may be stearyl alcohol, ceryl alcohol, paraffin wax or the like. It is preferable that the diluent is a liquid at room temperature from viewpoints of prevention of uneven drawing and coating convenience at a later stage. The liquid diluent may be a fatty series such as nonane, decane, decalin, paraxylene, undecane, dodecane and liquid paraffin; a cyclic fatty series or an aromatic hydrocarbon; a mineral oil fraction having a boiling point between those of compounds thereof; or a phthalate ester, such as dibutyl phthalate and dioctylphthalate which are liquids at room temperature. To obtain a gelled sheet stably containing liquid diluent, it is preferable to employ a nonvolatile diluent such as liquid paraffin. For example, it is preferable that the liquid diluent has a viscosity of 20 to 200 cSt at 40°C.

It is preferable that the polyolefin resin of 10 to 50 mass% is mixed with the diluent in total 100 mass% of polyolefin resin and diluent, from a viewpoint of good formability of extruded product. The polyolefin resin solution may be melt-kneaded uniformly by a calendar, mixer or extruder 21 having a screw as shown in Fig. 1.

It is preferable that the polyolefin resin solution in extruder has a predetermined temperature of which range is 140 to 250 °C for polyethylene composition and is 190 to 270 °C for polypropylene-containing composition, as depending on resin kind. A thermometer is provided inside extruder or in a cylinder section to monitor a temperature indirectly and properly adjust the heater temperature, rotation speed and discharge rate of the cylinder section to control the temperature in a target range.

The polyolefin resin solution which has been melt-kneaded by extruder 21 is discharged through a slit section of die lip 23 into a sheet while it is measured with gear pump 22 as needed. Such discharged gelled sheet 12 is solidified as contacting cooling drum 31. Where, gelled sheet 12 becomes a pillar part with crystal structure made of the polyolefin supporting pores of microporous plastic film 11. Gelled sheet 12 becomes in a gel state since it includes the diluent melt-kneaded in extruder 21. A part of the diluent bleeds out from sheet surface by cooling gelled sheet 12 so that the sheet with wet surface made by the diluent is conveyed on cooling drum 31. The thickness of gelled sheet 12 can be adjusted by adjusting the cooling drum speed relative to the flow rate from the die lip slit section according to discharge rate.

It is preferable that cooling drum 31 has a temperature of 15 to 40 °C, which may affect on the crystal structure of gelled sheet 12. It is because the final cooling temperature should be below the crystallization ending temperature. The molecular orientation tends to advance in a later drawing process when the higher-order structure is fine. To make up for cooling time, it is possible, that the diameter of cooling drum 31 is enlarged, that cooling drum 32 is added to cooling drum 31 or that a plurality of cooling drums are further added. To make the crystal structure precise and uniform in gelled sheet 12, it is preferable that a parameter, such as convey speed, drum temperature, drum size and the number of drums, is designed in view of the cooling speed. For example, even when a target sheet temperature is 30°C, cooling drum 31 may be around 20°C because too high speed might cause insufficient heat conduction. Besides, it is preferable that humidity is lowered by air conditioning when the temperature is below 25°C. Cooling drum 31 may have a shape of roller or belt. It is preferable that a surface of cooling drum 31 is made of a material which is excellent in shape stability and working accuracy to keep the roller speed constant. Such a material may be metal, ceramic or fiber composite material. It is particularly preferable that the surface is made of a metal which is excellent in heat conduction to a film. It is possible to perform non-adhesion coating or rubber coating on it to the extent that conduction is not obstructed. It is preferable that the surface of sheet and roller are made of metal including metal plating which is excellent in scratch resistance and heat conductivity and is not swelled by the bled-out diluent making wet state on the surface.

It is preferable that cooling drums 31 and 32 are provided with a conventional heat pump or cooling device in addition to an internal flow path for flowing refrigerant to control the surface temperature. The roller is driven to rotate by a rotation driving means such as motor at a predetermined speed while a speed-changing mechanism may be provided between rollers to apply draw tension or relaxation according to expansion and shrinkage of the sheet. Alternatively, each roller may be provided with a motor to achieve function like the speed-changing mechanism by accurately adjusting the speed by inverter or servo.

In Fig. 1, the top side of gelled sheet 12 is discharged from die lip 23 and contacts first cooling drum 31 which first contacts it, and then is rapidly cooled with refrigerant at the above-described temperature. On the other hand, the side opposite to the side contacting the above-described first cooling drum 31 is slowly cooled with air as shown in Fig. 1. Although it is not illustrated in the figures, it is preferable that the side opposite to the side contacting first cooling drum 31 is cooled by forced circulation with air nozzle or air chamber to make a rapid cooling of the opposite side. Such a configuration would be suitable to such a case that the conveying speed is high or the gelled sheet is too thick to conduct heat sufficiently to cooling drum 31. Also, the opposite side can be improved in cooling ability by providing a refrigerant-flowing nip roller in which refrigerant flows inside opposite to cooling drum 31.

To prevent wet gelled sheet 12 from meandering or degrading the cooling efficiency by lubrication, it is possible that the sheet is pushed onto cooling drum 31 with a contacting means such as nip roller, jet nozzle, suction chamber and electrostatic application. Such a contacting means can improve the travelling property and cooling efficiency of gelled sheet 12 to enable easy setting of the cooling speed and the final cooling temperature.

Other than cooling drum 31, it is preferable that gelled sheet 12 is depressed with a nip roller onto second cooling drum 32 or other conveying roller to increase coefficient of friction which has been decreased on the mirror surface. It is preferable that the surface of nip roller is made of rubber-like elastic material which can depress gelled sheet 12 uniformly onto uneven thickness of gelled sheet 12, deflection of roller and slight surface unevenness. The rubber-like elastic material is preferably a general vulcanized rubber such as Nitrile isoButylene-isoprene Rubber (NBR), Chloroprene Rubber (CR), Ethylene Propylene Rubber (EPDM) and Hypalon rubber (CSM). When gelled sheet 12 or conveying roller has a high temperature like 80°C or higher, it is particularly preferable to employ the EPDM or CSM. Under a higher temperature, it is preferable to employ a silicone rubber or a fluorine rubber as well as the vulcanized rubber. It is preferable to employ a rubber which is little swelled by diluent to prevent the roller from having a distorted shape over time.

Next, gelled sheet 12 is oriented in a sheet-conveying direction with a plurality of roller groups in lengthwise drawing process 4, and then both ends of uniaxially oriented sheet 13 are gripped by a conventional clip to be oriented in a sheet width direction (direction orthogonal to the conveying direction) while the sheet is conveyed in the travelling direction while heated and kept warm in an oven.

For example, gelled sheet 12 may be drawn lengthwise with two drawing rollers which have a speed difference therebetween. When three drawing rollers are provided in lengthwise drawing process 42 as shown in Fig. 1, the drawing may be performed between drawing rollers 421 and 422, between drawing rollers 422 and 423, or both therebetween. One step of drawing is performed by either one of the two drawings while two steps of drawings are performed by both of them. Such a drawing process can achieve a high productivity and characteristics such as strength and air permeability of microporous film. The drawing process in the sheet-conveying direction (which may be called "lengthwise drawing") as well as driving process is performed with a roller having a metal surface and a temperature control mechanism such as conventional heater inside. To ensure the freedom of roller path, it is possible to provide an idler roller which is not driven and not shown in Fig. 1. Such an idler roller should have small bearing and inertia loss so that a small rotation power is sufficient because the coefficient of friction is small between wet film and roller, and should not be provided more than needed.

Alternatively, like cooling drum 31, it is preferable that heating roller group 41 or drawing roller group 42 has an internal structure in which the roller is provided with a flow path for heat medium such as vapor and pressured hot water. It is possible that the roller is supported as rotatable with bearings and a shaft end is connected to a heat-medium supply pipe with a rotary joint for supplying heat medium without obstructing the rotation of roller to supply heat medium to the inside.

It is preferable that the drawing is performed at a draw ratio of 5 to 12 in a sheet conveying direction although depending on the gelled sheet thickness. To improve strength and productivity, it is preferable that the drawing is performed at an area ratio of 30 or more in a sheet width direction together with the sheet conveying-directional drawing. It is preferable that the area ratio is 40 or more, preferably 60 or more.

It is preferable that a drawing temperature is a melting point of polyolefin resin or less. It is preferable that the temperature is in a range of [crystal dispersion temperature Tcd of polyolefin resin] to [melting point of polyolefin resin]. For example, it is preferable that the temperature is 80 to 130 °C for polyethylene resin, preferably 100 to 125 °C. After the drawing, a cooling process is performed down to these temperatures.

Thus performed drawing cleaves a higher order structure formed on the gelled sheet to miniaturize crystal phase and form many fibrils. The fibrils are three-dimensionally connected irregularly to form a web structure.
It is suitable for a battery separator because the drawing improves mechanical strength and enlarges fine pores.

Thus obtained uniaxially oriented sheet 13 or biaxially oriented sheet 14 can be washed to remove diluent and dried up to make microporous plastic film 11 by a conventional technology as disclosed in WO2008/016174. To make microporous plastic film 11, it is possible that dry drawing process 7 is performed to reheat and redraw the sheet after washing process 6. Re-drawing process 7 may be performed with a roller or a tenter. Also, heat treatment may be performed to adjust physical properties and remove residual distortion through the process. Depending on intended purposes, it is possible that the surface of microporous plastic film 11 is subject to a surface treatment such as corona discharge or functional coating with heat-resistant particles.

In Fig. 1, included diluent bleeds out from gelled sheet 12 by being cooled on cooling drums 31 and 32. The diluent bleeds out even by stress derived from conveying tension. For the same reason, gelled sheet 12, oriented films 13 and 14 have a surface wet with diluent after being discharged from die lip 23 before the diluent is removed in washing process 6. In particular, gelled sheet 12 is heated up to the above-described drawing temperature with heating roller group 41 or the like in lengthwise drawing process 4, so that the heating accelerates the bleeding out of the diluent. Such amount of bleeding out is great at a part from cooling drum 31 to heating roller group 41 upstream of lengthwise drawing process 4. Because the diluent bleeding out drops along the roller surface in Fig. 1, it is preferable that a pan (not shown) to collect it to be discarded or reused is provided.

Although heating roller group 41 and drawing roller group 42 are common to each other in terms of heating and heat-keeping function of gelled sheet 12 and variable roller rotation speed, drawing roller group 42 comprises a roller to substantively draw gelled sheet 12 and generates a peripheral speed difference to permanently deform gelled sheet in the travelling direction. More particularly, drawing roller group 42 is defined as rollers which substantively draw it as generating 3% or more of peripheral speed difference to the upstream roller.

Gripping force (frictional force) is necessary between the roller and gelled sheet 12 to convey gelled sheet 12 without meandering in a travelling direction. Particularly in drawing roller group 42 where a high tension is generated by drawing, a high gripping force balancing the drawing tension is required to achieve a necessary draw ratio. The diluent having bled out as described above intervenes between the roller and gelled sheet 12 in lubrication state to cause a deterioration of the gripping force required for conveyance and drawing.

When the drawing is performed between first drawing roller 421 and second drawing roller 422, between second drawing roller 422 and third drawing roller 423, or both therebetween in lengthwise drawing process 4, the drawing tension at the downstream side is balanced by receiving with the clip which grips the end of uniaxially oriented sheet 13 mainly in lateral drawing process 5. When the drawing is performed only between first drawing roller 421 and second drawing roller, second drawing roller 422 is regarded as drawing roller (B) at the most downstream side in conveying direction for the drawing while first drawing roller 421 is regarded as drawing roller (A) adjacent to drawing roller (B) at the upstream side in conveying direction. The lengthwise drawing is performed only between drawing roller (A) and drawing roller (B), and therefore the draw ratio is regarded as greatest in the sheet conveying direction. When a ratio ([travelling speed of clip] - [peripheral speed of drawing roller (B)] / [peripheral speed of drawing roller (B)]) of travelling speed of clip at the most upstream side in conveying direction of lateral drawing process 5 to the peripheral speed of drawing roller (B) which is second drawing roller 422 is -3% to +3%, the downstream drawing tension is balanced to the clip of lateral drawing process to prevent gelled sheet 12 from slipping in the lateral drawing process. It is preferable that a ratio of tenter clip speed at the most upstream side in conveying direction to the peripheral speed of drawing roller 423 is small.

It is more preferable that two steps of drawing are performed both between first drawing roller 421 and second drawing roller 422 and between second drawing roller 422 and third drawing roller 423 as shown in Fig. 1. With such a configuration, the drawing tension can be dispersed and the slip can be prevented. Where, the drawing should be performed by the greatest draw ratio between drawing rollers (A) and (B) wherein third drawing roller 423 is regarded as drawing roller (B) at the most downstream side while second drawing roller 422 is regarded as drawing roller (A) adjacent to drawing roller (B) at the upstream side in conveying direction. With such a configuration, primary drawing tension in the process is generated between second drawing roller 422 and third drawing roller 423, so that the downstream drawing tension can be balanced to the tenter clip. On the other hand, when the drawing is also performed between first drawing roller 421 and second drawing roller 422, the above-described balance of primary upstream drawing tension can increase the friction force generated by the first step drawing tension between gelled sheet 12 and first drawing roller 421 or second drawing roller 422 to prevent slipping. It is more preferable that nip roller 44 is provided on a roller upstream from second drawing roller 422 as shown in Fig. 1, so that the upstream drawing tension can be balanced and slip can be prevented.

Although cooling roller group 43 may partially bear the drawing tension, it may not have a gripping force required to prevent the slip. Therefore it is preferable that the speed is equaled to the speeds of lateral drawing process 5, second drawing roller 422 and uniaxially oriented sheet 13. When the drawing is performed only between first drawing roller 421 and second drawing roller 422 in Fig. 1, it is preferable that all the speeds from third drawing roller 423 to cooling roller group 43 are the same as speed of second drawing roller 422 and the tenter clip at the most upstream side in conveying direction. Before the oriented sheet is fed to lateral drawing process 5, it is possible that the sheet is once cooled and conveyed to a tenter oven to make the process paper feed of uniaxially oriented sheet 13 easy while the crystal structure formed by the lengthwise drawing is solidified in a case of lateral drawing, so that a highly oriented and highly strengthened microporous plastic film can be prepared. When rollers after second drawing roller 422 are also a cooling roller group, it can be cooled at the same time of finishing the drawing to prevent unnecessary size distortion and tension change.

Further, because two steps of drawing are performed both between first drawing roller 421 and second drawing roller 422 and between second drawing roller 422 and third drawing roller 423 as shown in Fig. 1, it is preferable that the speeds of all rollers from drawing roller 423 as drawing roller (B) to cooling roller group 43 are the same as the tenter clip at the most upstream side in conveying direction. It is also preferable that they are cooled. It is further preferable that the three or four steps of drawing are performed to disperse and reduce primary drawing tension, so that the upstream gripping force can be improved. However even in this case, the drawing should be performed by the greatest draw ratio between drawing roller (B) at the most downstream side in conveying direction and drawing roller (A) adjacent to drawing roller (B) at the upstream side in conveying direction.

With such a configuration, uniaxially oriented sheet 13 travelling in lateral drawing process 5 after drawing roller (B) has almost the same tension as the drawing tension generated between drawing rollers (A) and (B). In Fig. 1, the drawing tension generated between second drawing roller 422 and third drawing roller 423 as drawing roller (B) is maintained from third drawing roller 423 to the tenter clip at the same speed and then is received by the tenter clip without slip.

The ratio of travelling speed of clip at the most upstream side in conveying direction to the peripheral speed of drawing roller (B) is set between -3% and +3% because the drawing tension is not very different in such a range. Also, the speeds of sheet and roller are equaled to each other, preferably by setting the speed ratio to a minus value in 0 to -3%, while gelled sheet 12 shrinks in conveying direction when the sheet is cooled, so that the drawing tension and the tension downstream the lengthwise drawing process are equaled to make it balanced easily. It is preferable that a ratio of tenter clip speed at the most upstream side in conveying direction to the peripheral speed of drawing roller 423 is small. It is preferable that a tension meter is provided at a part from drawing roller group 42 to lateral drawing process 5 to obtain measured values, so that the speed ratio can be adjusted accurately to balance the tension.

It is preferable that the lengthwise draw ratio is 4 to 12 times in terms of total draw ratio. In a case of performing multi steps of drawing as described above, the greatest speed ratio of drawing roller (A) and drawing roller (B) should be 2 to 6 times while quotient of the ratio of drawing roller (A) and drawing roller (B) divided by the total draw ratio should be 0.3 or more. The total draw ratio of 4 or more can disperse uneven thickness of gelled sheet 12 and sufficiently achieve mechanical properties such as strength and elastic modulus of sheet obtained by drawing. The total draw ratio of 12 or less can make it hard to generate breakage, excessive drawing tension and slip in the drawing process.

For example, the total draw ratio of 10 makes 3 (=10 x 0.3) or more of the ratio of drawing roller (A) and drawing roller (B). Because the ratio of drawing roller (A) and drawing roller (B) is the greatest in two steps of drawing, it is possible that the first step of drawing is performed by 2.85 times of the ratio while the second step of drawing (which means drawing between drawing roller (A) and drawing roller (B)) is performed by 3.5 times of the ratio. The first and second ratios may be adjusted to satisfy the above-described condition. For example, it is possible that the first step ratio of 2.5 times makes the second step ratio 4 times. Any ratio between drawing roller (A) and drawing roller (B) should be 2 to 6 times. The ratio of 6 or more might not prevent slip in one drawing section, so that the clip can grip the downstream side but there might be slipping at the upstream side. In contrast, although the lower limit of total draw ratio of 4 between drawing roller (A) and drawing roller (B) multiplied by 0.3 equals 1.2, the greatest draw ratio requires 2 or more times in the same section.

When the lengthwise draw ratio is 10 times, it is preferable that more than two steps of drawing are performed although such a configuration is not shown in Fig. 1. For example, three steps of drawing in the drawing section will be considered. It is preferable that the third step of draw ratio in a section of drawing roller (A) and drawing roller (B) is 2 to 6 times, preferably 3 or more times because of 10 x 0.3 or more. For example, when the third step ratio is 3 times, the product of ratios of the upstream first and second steps are 3.33 (=10/3) and then each should be 1.83 (=3.33^0.5). Therefore the ratio is 10 times (=1.83 x 1.83 x 3). Alternatively, it is possible that the ratio is 10 times (=1.67 x 2 x 3) as increasing the ratio from upstream side to downstream side.

To balance the upstream tension, it is preferable that nip roller 44 is provided from the heating roller group to drawing roller (A). It is preferable that the nip pressure is 300 to 2,000 [N/m] per unit width without meandering by excessively pressing with a pair of roller conventionally, although the nip pressure may be adjusted and changed for each driving roller naturally. As shown in Fig. 1, cooling roller group 43 may comprise nip rollers.

It is preferable that the surface of nip roller is made of soft rubber-like elastic material which can depress gelled sheet 12 uniformly onto uneven thickness of gelled sheet 12, deflection of roller and slight surface unevenness. Because the lengthwise drawing process accompanies conveyance above the heat dispersion temperature in particular, the material is preferably a heat-resistant rubber such as EPDM and Hypalon rubber. It is preferably silicone rubber or fluoro-rubber. It is preferable to employ a rubber which is little swelled by diluent to prevent the roller from having a distorted shape over time.

It is possible that a nip is performed along a tangent line substantively with a nip roller to prevent air bank from generating when introducing gelled sheet 12 into heating roller or drawing roller as shown in Fig. 1, so that slip and meandering can be prevented as improving uniformity of thickness and appearance quality.

It is preferable that the roller has a surface roughness of 0.2 to 40 µm at the maximum height. To make a mirror surface, the surface roughness is preferably 0.2 to 0.8 µm. To make a sufficiently rough surface, the surface roughness is preferably 20 to 40 µm. Because the surface of the roller is wet with the diluent, the mirror surface has a low coefficient of friction caused by lubrication. The rough surface has an increased coefficient of friction caused by less or no lubrication because the diluent discharges from the unevenness. Although the mirror surface and the rough surface may be combined as needed, it is basically preferable that the mirror surface is provided from viewpoints of maintenance such as cleaning and speed control precision, preferably with a certain lubricant with diluent to prevent the sheet from having uneven appearance.

To prevent the surface of gelled sheet from being roughed by nipping when gripping force of nip roller is ensured as in our invention, it is particularly preferable that the driving roller has a mirror surface of which maximum height is 1S, or 1µm or less, preferably 0.2 to 0.8 µm. To make such a mirror surface, the nip roller surface may be made of metal or ceramic as described above.

### [Examples]

Hereinafter, our invention will be explained with reference to Examples although it is not limited to these Examples in particular.

### [Example 1]

A mixture is prepared by dry-blending of 0.375 parts by weight of tetrakis[methylene-3-(3,5-ditertiary butyl-4-hydroxyphenyl)-propionate] methane together with 100 parts by weight of polyethylene (PE) composition which comprises 40 mass% of ultrahigh molecular weight polyethylene having mass average molecular weight (Mw) of 2.5x10⁶ and 60 mass% of high-density polyethylene having Mw of 2.8x10⁵.

Thus obtained mixture is fed to twin-screw extruder 21 at flow rate of 97kg/hr by a film forming method shown in Fig. 1. Liquid paraffin as a diluent is fed to twin-screw extruder 21 at flow rate of 291kg/hr to be blended with twin-screw extruder at 210°C.

Thus obtained polyethylene solution is supplied into die lip 23 as being measured by a gear pump and the polyethylene solution at 210°C is discharged on cooling drum 31 adjusted to 35°C by waterflow to form gelled sheet 12. Cooling drum 31 is driven to rotate at 10m/min.

Gelled sheet 12 is subject to sampling with 10mm square before introduction to lengthwise drawing process 4 to find that the thickness is 1.5mm in 10 times average of contact-type thickness meter. Since bled-out diluent adheres to the surface, the above-described thickness measurement includes ±0.1mm variation at the maximum.

Gelled sheet 12 is heated to 110°C on the sheet surface with heating roller group 41 and a metal waterflow roller of first drawing roller 421. Between heating roller group 41 and first drawing roller 421, the rotation speed of motor directly connected to the roller is controlled to make the downstream side faster by 1% of speed difference according to thermal expansion of the sheet. Drawing roller group 42 consists of 3 rollers shown in Fig. 1. Nip roller 44 of which surface is coated with rubber is provided onto each roller to perform lengthwise drawing by speed difference between rollers. The speed of first cooling drum 31 is set to 10m/min, speed ratio from heating roller group 41 to first drawing roller 421 is set to 1%, the speed of first drawing roller 421 is set to 10.4m/min, and the speed of second drawing roller 422 is set to 10.4 x 1.23 = 12.8m/min. The speed is controlled to set to 9 the total draw ratio of uniaxially oriented sheet 13 passing lengthwise drawing process 4, wherein the drawing is performed by the maximum draw ratio between second drawing roller 422 as drawing roller (A) and third drawing roller 423 as drawing roller (B) while the speed of third drawing roller 423 is 12.8 x 7 = 90m/min.

Oriented film 13 is cooled on four rollers of cooling roller group 43 including third drawing roller 423 as the last roller of drawing roller group 42 to adjust the waterflow roller temperature to make the sheet temperature 50°C. The most upstream clip speed in conveying direction of lateral drawing process 5 is set to -2%, so that third drawing roller 423 as last drawing roller (B) and cooling roller group 43 have the same speed of 88.2m/min as uniaxially oriented sheet 13 to shrink.

From first cooling drum 31, all rollers in lengthwise drawing process 4 are made of steel coated with hard chromic plating of which surface roughness is 0.4µm (0.4S) at the maximum height.

As shown in Fig. 1, six upstream nip rollers 44 are facing from heating roller group 41 to second drawing roller 422 while four downstream nip rollers are facing to four cooling roller group including third drawing roller 423.

Both ends of oriented film 13 are gripped with a clip to perform lateral drawing at draw ratio of 6 times at 115°C in an oven, and then biaxially oriented film 14 cooled down to 30°C is washed in a washing bath of methylene chloride kept at 25°C to remove liquid paraffin. The washed film is dried up in a dry kiln kept at 60°C and then is drawn again in redrawing process 7 at areal ratio of 1.2 times in lengthwise and lateral directions. The heat treatment is performed for 20 seconds by 88.2m/min at 125°C to prepare microporous plastic film 11 having thickness of 16µm and width of 2,000mm.

### [Example 2]

In a configuration shown in Fig. 1, the speed of first cooling drum 31 is set to 10m/min, speed ratio from heating roller group 41 to first drawing roller 421 is set to 1%, the speed of first drawing roller 421 is set to 10.4m/min, and the speed of second drawing roller 422 is set to 10.4 x 2.163 = 22.5m/min. The speed is controlled to set to 9 the total draw ratio of uniaxially oriented sheet 13 passing lengthwise drawing process 4 so that the ratio of draw ratio between drawing roller (A) and drawing roller (B) to the total lengthwise draw ratio is 0.44 (>0.3), wherein the drawing is performed by the maximum draw ratio between second drawing roller 422 as drawing roller (A) and third drawing roller 423 as drawing roller (B) while the speed of third drawing roller 423 is 22.5 x 4 = 90m/min by the ratio is between 2 to 6 times. The other conditions are the same as Example 1.

### [Example 3]

In a configuration shown in Fig. 1, the travelling speed ratio of the most upstream clip in conveying direction of lateral drawing process relative to third drawing roller 423 is set to +3%, so that the speed after lateral drawing process 5 is 92.7m/min. The other conditions are the same as Example 2.

### [Example 4]

In a configuration shown in Fig. 1, the travelling speed ratio of the most upstream clip in conveying direction of lateral drawing process relative to third drawing roller 423 is set to -3%, so that the speed after lateral drawing process 5 is 87.3m/min. The other conditions are the same as Example 2.

### [Comparative Example 1]

In a configuration shown in Fig. 1, the travelling speed ratio of the most upstream clip in conveying direction of lateral drawing process relative to third drawing roller 423 is set to +5%, so that the speed after lateral drawing process 5 is 94.5m/min. The other conditions are the same as Example 1.

### [Comparative Example 2]

In a configuration shown in Fig. 1, the speed is controlled to set to 9 the total draw ratio of uniaxially oriented sheet 13 passing lengthwise drawing process 4, wherein the speed of first cooling drum 31 is set to 10m/min, speed ratio from heating roller group 41 to first drawing roller 421 is set to 1%, the speed of first drawing roller 421 is set to 10.4m/min, the speed of second drawing roller 422 is set to 10.4 x 4 = 41.6m/min, and the speed of third drawing roller 423 is set to 41.6 x 2.163 = 90m/min. The other conditions are the same as Example 1.

### [Slip on drawing roller]

The speeds of sheet and roller are measured by 1% accuracy including installation accuracy with a non-contact Doppler velocimeter (made by ACT Electronics Corp., model 1522). For all Examples and Comparative Examples, slip of film 11 before drawing is evaluated according to the following standards.
No good: The speed difference between roller and sheet is 10% or more of roller rotation speed.
Acceptable: The speed difference between roller and sheet is 5% or more and less than 10% of roller rotation speed.
Good: The speed difference between roller and sheet is less than 5% of roller rotation speed.

### [Meandering amount in lengthwise drawing process]

The amount of meandering in lengthwise drawing process 4 is evaluated according to the following standards.
No good: Meandering amount is 10mm or more.
Acceptable: Meandering amount is 5mm or more and less than 10mm.
Good: Meandering amount is less than 5mm.

### [Physical properties and mechanical properties of microporous plastic film]

The Gurley impermeability is determined according to JIS P8117 with Oken type Impermeability Tester (made by Asahi Seiko Co., Ltd., EGO-1T).

The thrust strength is determined from the maximum load applied when a needle having 1mm diameter and spherical tip (Radius of curvature R=0.5mm) is pricked at 2mm/sec into a microporous membrane having membrane thickness T1. The measured maximum load La is converted to Lb which would be the maximum load when membrane thickness is 16µm according to the following formula: Lb = (La x 16) /T1 to calculate the thrust strength [N/16µm].
Good: The Gurley impermeability is 250sec ± 20sec while the thrust strength is 6N or more.
No good: Outside the range for the above-described Good

**[Table 1]**

| | Sectional draw ratio | | Total Lengthwise draw ratio | Quotient of speed ratio of drawing roller 423 to drawing roller 422 divided by total draw ratio | Ratio of tenter clip speed most upstream in conveying direction to peripheral speed of drawing roller 423 |
|---|---|---|---|---|---|
| | Between drawing roller 421 and drawing roller 422 | Between drawing roller 422 and drawing roller 423 | | | |
| Example 1 | 1.23 times | 7 times | 9 times | 0.778 | -2% |
| Example 2 | 2.163 times | 4 times | 9 times | 0.44 | -2% |
| Example 3 | 2.163 times | 4 times | 9 times | 0.44 | +3% |
| Example 4 | 2.163 times | 4 times | 9 times | 0.44 | -3% |
| Comparative Example 1 | 1.23 times | 7 times | 9 times | 0.778 | +5% |
| Comparative Example 2 | 4 times | 2.163 times | 9 times | 0.24 | -2% |

**[Table 2]**

| | Conveyance | | Physical properties, mechanical properties | | |
|---|---|---|---|---|---|
| | Slip on drawing roller | Meandering | Thrust strength [N] | Gurley impermeability [sec] | Comprehensive evaluation of physical properties |
| Example 1 | Acceptable | Acceptable | 7 | 250 | Good |
| Example 2 | Good | Good | 7 | 250 | Good |
| Example 3 | Good | Good | 7 | 250 | Good |
| Example 4 | Good | Good | 7 | 250 | Good |
| Comparative Example 1 | No good | No good | 4 | 350 | No good |
| Comparative Example 2 | No good | No good | - | - | - |

By comparing Examples and Comparative Examples, it is found that all Examples the drawing is performed by the greatest draw ratio between second drawing roller 422 and third drawing roller 423. Thus primary drawing tension is generated in the section while the speeds of second drawing roller 422 and third drawing roller 423 are controlled to substantively the same speed as the tenter clip speed. As a result, tenter clip receives downstream drawing tension to continuously provide microporous plastic film 11 stably with no slip and no meandering. Particularly in Examples 2-4, the speed ratio is adjusted in a range of 2 to 6 times in the drawing section to stably prevent slip caused by upstream drawing tension.

In contrast, because the speed ratio of tenter clip to third drawing roller 423 in Comparative Example 1, a tension greater than the drawing tension is generated between lengthwise drawing process 4 and lateral drawing process 5. As a result, microporous plastic film 11 having desirable physical properties and mechanical properties cannot be provided with no slip and no meandering.

Even in Comparative Example 2, the drawing cannot be performed by the greatest draw ratio in the most downstream section of drawing roller. Therefore, slip is generated near second drawing roller 422 before the clip receives the drawing tension and both slip and meandering cannot be prevented. As a result, a microporous plastic film cannot be sampled because of particularly great meandering obstructing the continuation of film forming. Thus the strength and permeability cannot be measured.

As described above, our invention makes it possible to provide a microporous plastic film excellent in strength and physical properties as maintaining a travelling stability in a drawing condition where the drawing is performed to give the microporous film desirable properties.

### Industrial Applications of the Invention

Our microporous plastic film is applicable, but not limited in particular, to a separator used for electrochemical reaction device such as rechargeable battery, fuel cell and capacitor as well as a functional web such as filtration membrane, print film and clothing material.

### Explanation of symbols

11: microporous plastic film
12: gelled sheet (film)
13: uniaxially oriented sheet (film)
14: biaxially oriented sheet (film)
15: microporous plastic film roll
21: extruder
22: gear pump
23: die lip
31: first cooling drum
32: second cooling drum
4: lengthwise drawing process
41: heating roller group
42: drawing roller group
421: first drawing roller
422: second drawing roller (drawing roller A)
423: third drawing roller (drawing roller B)
43: cooling roller group
44: nip roller
5: lateral drawing process
6: washing/drying process
61: washing solvent
7: re-drawing heat-treatment process
8: take-up process

## Claims

1. A method for producing a microporous plastic film, the method comprising:
kneading a diluent and a polyolefin resin with an extruder;
discharging the polyolefin resin kneaded with the diluent from a die lip in a sheet shape;
cooling and solidifying the sheet discharged from the die lip on a drum;
reheating and drawing the solidified sheet with a plurality of rollers in a sheet conveying direction;
cooling the sheet drawn in the sheet conveying direction;
gripping both ends of the sheet with clips;
introducing the sheet into a tenter; and
washing the diluent out to prepare a uniaxially or biaxially oriented microporous plastic film, wherein
the drawing between a roller (B) at the most downstream side in the sheet conveying direction among the rollers and a roller (A) which is adjacently upstream to the roller (B) in the sheet conveying direction and is driven by a motor is performed by a draw ratio greatest among the drawing in the sheet conveying direction, and
a ratio of travelling speed of the clip of the tenter at the most upstream side in the sheet conveying direction to a peripheral speed of the roller (B) is -3% to +3%.

2. The method for producing a microporous plastic film according to claim 1, wherein
the drawing is performed by a total draw ratio of 4 to 12 times in the sheet conveying direction,
a peripheral speed ratio of the roller (B) to the roller (A) is 2 to 6 times, and
a quotient of the peripheral speed ratio of the roller (B) to the roller (A) divided by the total draw ratio in the sheet conveying direction is 0.3 or more.

3. A microporous plastic film produced by the method according to claim 1 or 2.

4. A battery separator comprising the microporous plastic film according to claim 3.

5. A battery comprising the battery separator according to claim 4.
